# EUROPEAN PATENT SPECIFICATION

(11) **EP 3 090 971 B1**
(45) Date of publication and mention of the grant of the patent: **03.01.2018**
(21) Application number: 16168458.4
(22) Date of filing: 04.05.2016
(51) Int. Cl.: B65G 47/90, B65G 65/00, B65G 1/00, A22C 15/00

(54) **METHOD TO STORE PRODUCTS AND IN PARTICULAR PORK MEATS**
VERFAHREN ZUR LAGERUNG VON PRODUKTEN UND INSBESONDERE VON SCHWEINEFLEISCH
PROCÉDÉ POUR STOCKER DES PRODUITS ET EN PARTICULIER DE LA VIANDE DE PORC

(30) Priority: 04.05.2015 IT BO20150225
(43) Date of publication of application: 09.11.2016
(73) Proprietor: Pulsar Industry S.r.l., 41057 Spilamberto (IT)
(72) Inventor: GIGLI, Emanuele, 41043 FORMIGINE (IT); VENTURI, Massimo, 41058 VIGNOLA (IT); GRANDI, Lorenzo, 41010 MODENA (IT)
(74) Representative: Bergadano, Mirko

(56) References cited:
- US-A1- 2009 011 695
- US-A1- 2011 081 224
- US-B2- 8 708 782

## Description

The present invention relates to a method to store products, such as hams, salami, or the like, according to the preamble of claim 1. As is known, once the pork meats have been processed, they are stored on a structure (referred to in the sector as "framework" or "rack"), and this structure is then taken into an environment where curing of the pork meats takes place.
The rack has a parallelepipedal conformation, which comprises: four or more vertical uprights;
a plurality of horizontal cross members installed on two opposite sides of the rack; and
a plurality of horizontal bars that rest with their ends on two opposite cross members that are coplanar with respect to one another.
The horizontal bars have a plurality of pins (evenly distributed throughout the length of the bar), which extend upwards and hung on each of which is a pork meat. Hung on the odd pins are the pork meats arranged on a first side of the bar, and hung on the even pins are the pork meats arranged on the opposite side of the same bar. At one end of each pork meat a loop is provided, constituted by a stretch of rope via which the pork meat is hung on the bar in so far as the loop is hooked onto the pin.
Currently, the step in which the pork meats are hung onto the respective pins is carried out either manually or via a device provided with a gripper that picks up the product from a system for conveying pork meats and then hangs it onto the respective pin.
The main problem that is encountered in the system just described lies in the fact that the pork meats hanging on the two sides of a same bar come into contact with one another, and this causes incorrect curing, given that proper curing requires the air to circulate freely over the entire surface of the pork meat.
To prevent this problem from arising, a support is used on which the products hanging on a first side of the bar are rested so as to keep them at a distance from the products hanging on the second side of the same bar. Even so, given the dimensions of certain types of pork meats, such as hams, contact is practically unavoidable.

Document US 2009/011695 A1 discloses a method to store products such as hams, salami, or the like, according to the preamble of claim 1.

The aim of the present invention is to provide a method to store products, such as hams, salami, or the like, that will be free from the aforementioned drawbacks, i.e., a method that envisages loading the bars in the rack in a simple and fast way and spacing apart the pork meats hanging on the two sides of the same bar in such a way that they do not touch one another and without any need to use spacer supports.
On the basis of the present invention, a method is provided for storing products, such as hams, salami, or the like, carried by a conveyor chain that has a plurality of hooks hanging on each of which is one said product, the method being characterized in that it comprises:
a first step, in which a robot picks up from a store, by means of a first organ, a first bar that has a plurality of pins;
a second step, in which said robot, by means of said first bar, hooks onto the bar itself a plurality of said products hanging on said hooks of said chain;
a third step, in which said robot places said bar in a storage structure;
a fourth step, in which said robot, by means of a second organ, picks up from said chain a plurality of further products hanging on said hooks; and
a fifth step, in which said robot transfers the plurality of further products just picked up from said chain into said structure by hanging said plurality of further products onto the pins with which said bar that had just been placed in said storage structure is provided.
For a better understanding of the invention, described in what follows is an embodiment provided purely by way of illustrative and non-limiting example, with the aid of the annexed drawings, wherein:
Figure 1 is a perspective view of a system that implements the method provided according to the teachings of the present invention;
Figure 2 is a perspective view of the system of Figure 1 in a first processing step;
Figure 3 is a perspective view of the system of Figure 1 in a second processing step;
Figure 4 is a side view of the system of Figure 1 with parts removed illustrating a third processing step;
Figure 5 is a side view of a part of a robot of the system of Figure 1; and
Figures 6 to 11 are views illustrating various parts of the robot of Figure 5.
With reference to Figures 1 to 4, designated as a whole by 1 is a system for storing raw hams 2, which comprises:
a storage structure 3;
a conveyor device 4, which carries the hams 2 from a processing station (not illustrated) to a loading station 5; and
a robot 6, designed to transfer the hams 2 from the conveyor device 4 to the structure 3.
The structure 3 has a prismatic shape and comprises:
four vertical uprights 7 that rest on the floor;
a first frame 8 with rectangular conformation, which connects the top ends of the uprights 7;
a second frame 11 with rectangular conformation, which connects a stretch of the uprights 7 close to the bottom ends thereof;
a plurality of first horizontal bars 12, fixed to two first vertical uprights 7 along a first wall of the structure 3, the first bars 12 being set at a constant pitch apart from one another;
a plurality of second horizontal bars 13, fixed to two second vertical uprights 7 along a second wall of the structure 3, the second bars 13 being set at a constant pitch apart from one another and being coplanar with respective first bars 12; and
three horizontal cross members 14, spaced apart from one another and fixed on one side on the first bar 12 that is closest to the frame 11 and on the opposite side on the second bar 13 that is closest to the frame 11.

The bars 12 and 13 thus define a plurality of racks spaced apart from one another by a same distance.
The conveyor device 4 is illustrated partially and comprises a framework 15 defined by vertical uprights 16, which rest on the floor and support an elongated body 19, along the peripheral edge of which a conveyor chain 17 with annular conformation is designed to run by the action of movement means (not illustrated). The conveyor chain 17 is provided, throughout its length, with a plurality of hooks 18.

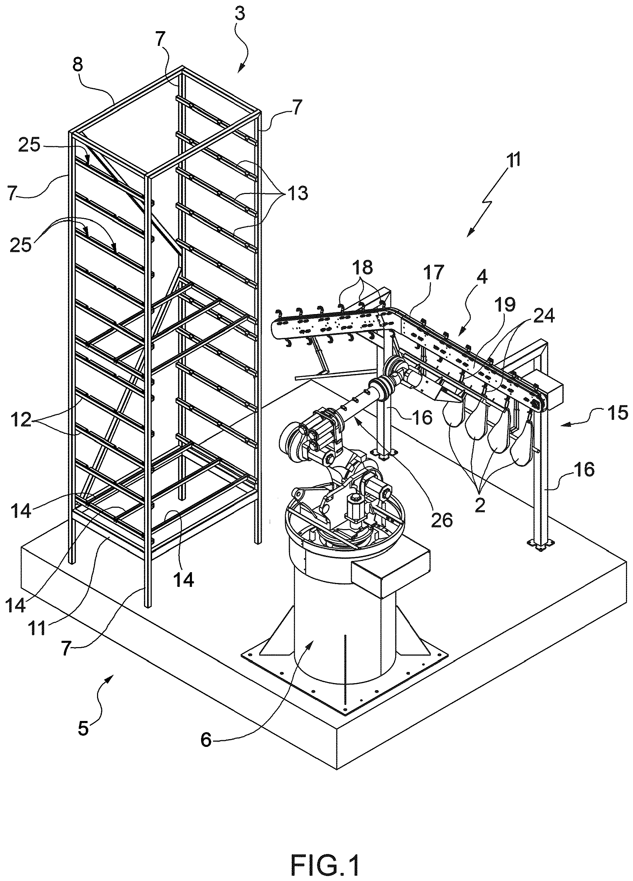

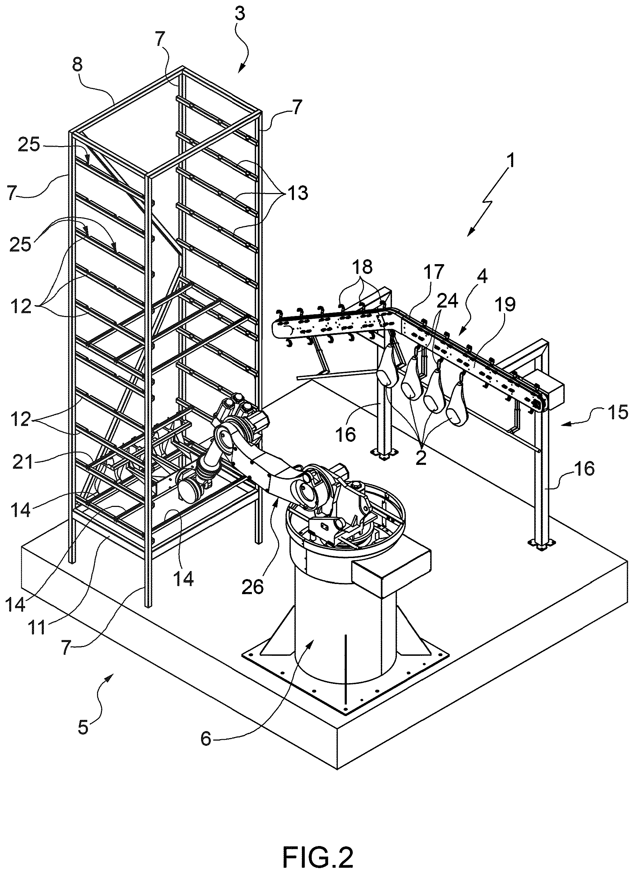

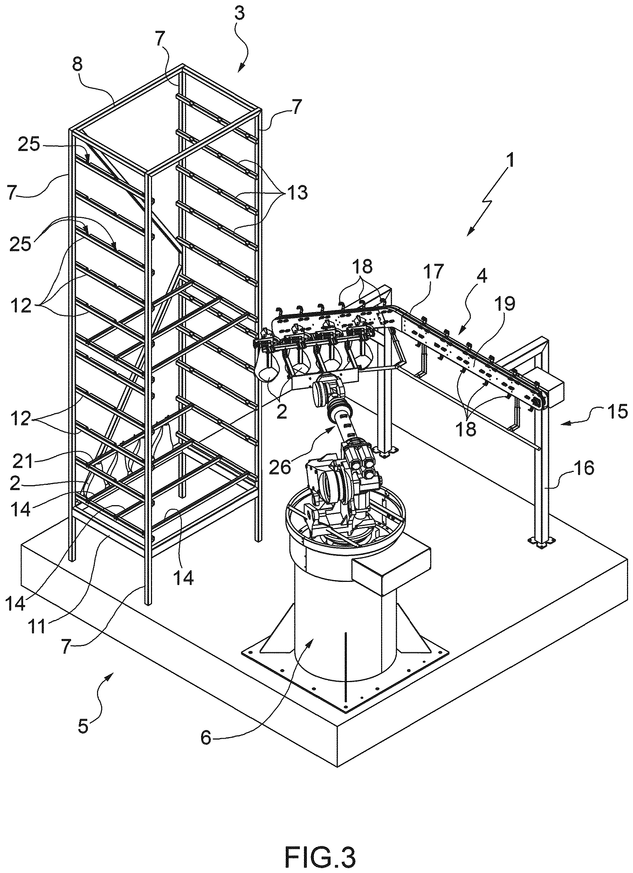

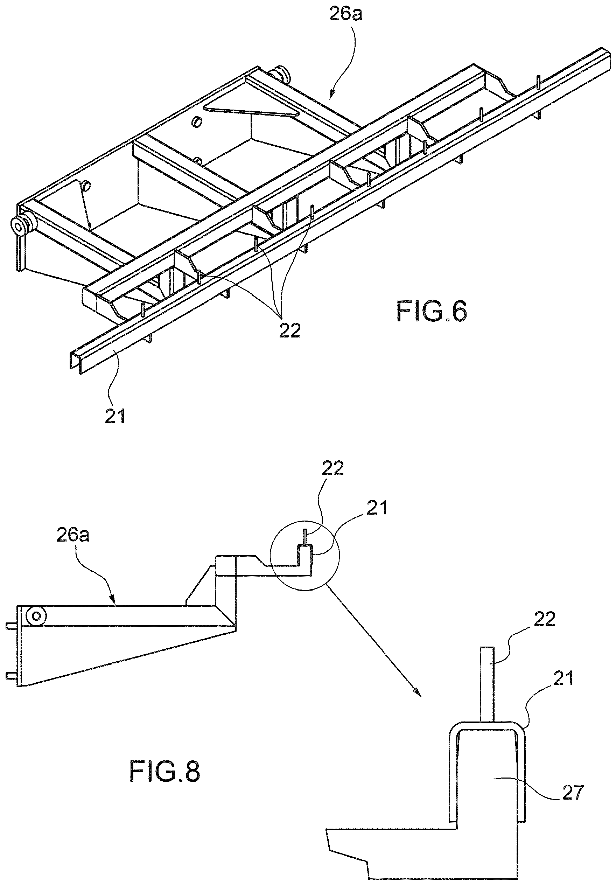

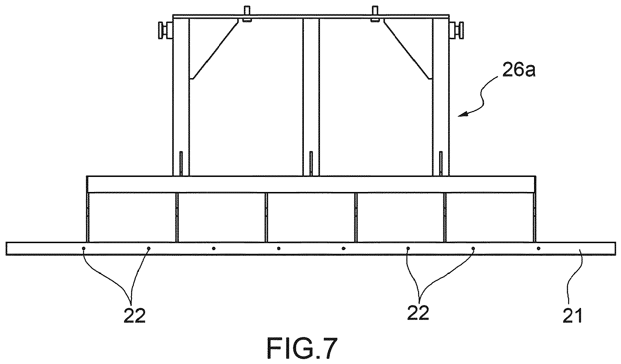

The system 1 comprises a plurality of bars 21 (Figures 2, 3, 6, 7, and 8) with a section shaped like a U turned upside down sticking upwards from the central wall of which are multiple pins 22 (Figures 6, 7, and 8) evenly spaced apart along the longitudinal development of the bar 21 itself. Each ham 2 at its shank end (top end) is provided (Figures 1 and 2) with a loop 24 (formed by a stretch of rope). In the processing station, once the hams 2 are ready, they are hooked by an operator one by one onto the hooks 18 of the conveyor chain 17. The first four hams hung by the operator onto the hooks 18 of the conveyor chain 17 present the part of the area to be smeared facing in a same direction opposite to the robot 6. Once the first four hams 2 have been loaded, another four hams 2 are hooked on, leaving one hook 18 between the two sets of four hams 2 free. The second set of hams 2 hooked on presents the part of the area to be smeared facing in a same direction and facing the robot 6.

A new set of four hams 2 is then loaded in succession oriented so as to present the part of the area to be smeared facing in a same direction opposite to the robot 6, leaving one hook 18 free and then loading a new set of four hams 2 oriented in a direction opposite to the previous one.

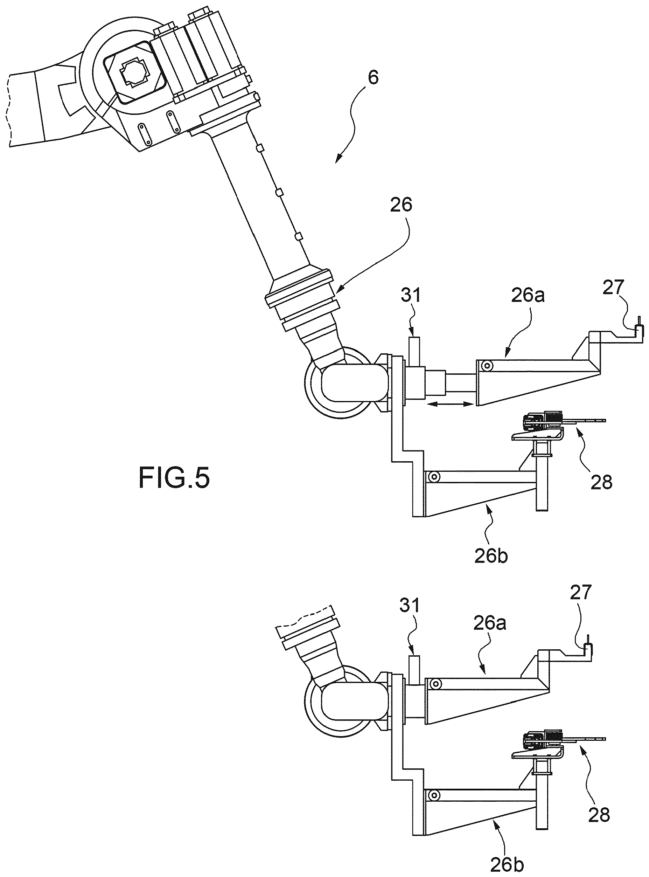

As the conveyor device 4 is loaded with hams 2, the chain 17 carries its load towards the loading station 5 where the system 1 is provided with the robot 6, which first picks up from the chain 17 the first set of hams 2 using the bar 21 and then rests this first bar 21 on the lowest rack of the structure 3 defined by a first bar 12 and a second bar 13. The bars 12 and 13 have three respective grooves 25 (Figures 1 to 4) set horizontally and orthogonal to the longitudinal development of the bars 12 and 13 themselves. Of course, the first bar 21 is positioned in the innermost part (as viewed by the robot 6) of the structure 3, and the longitudinal ends of the bar 21 are housed in the grooves 25 of the bars 12 and 13. In order to pick up the bar 21 from the structure 3 and then rest it again on the structure 3 and on the bars 12 and 13, the robot 6 is provided with an actuation arm 26 (Figures 1 to 5) that supports a first organ 26a (Figures 5 to 8), which in turn has (Figures 5 and 8) a horizontal rod 27 that fits, from beneath, into the bar 21. Then the arm 26 is raised so as to unhook the hams 2 from the chain 17 via the bar 21 itself.

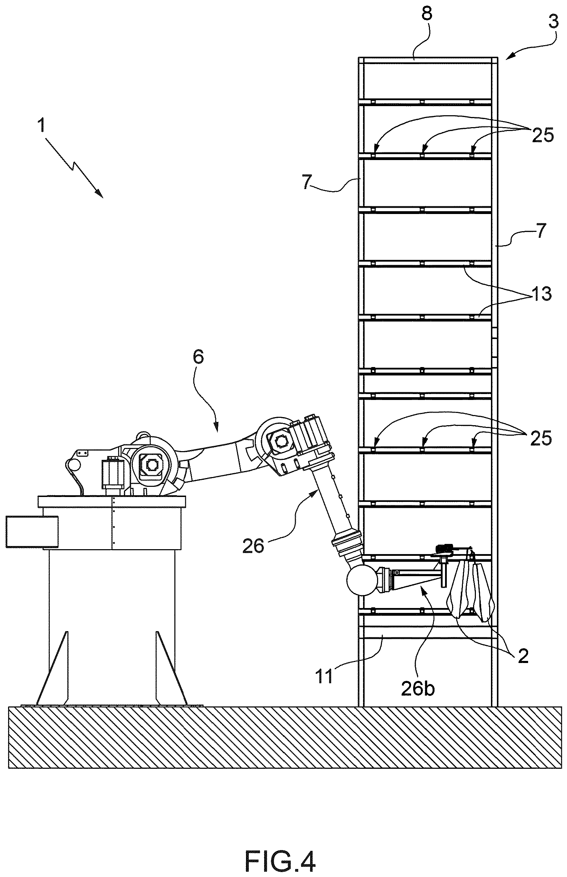

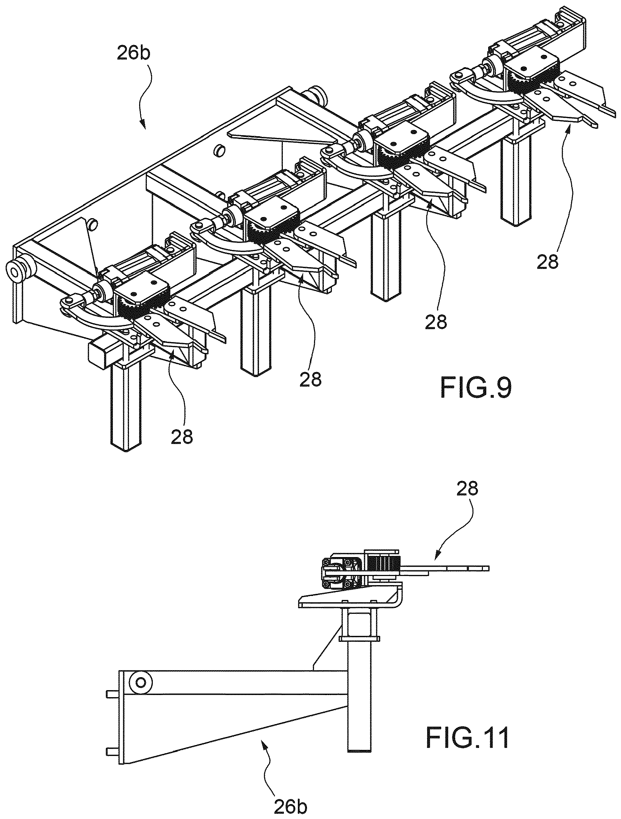

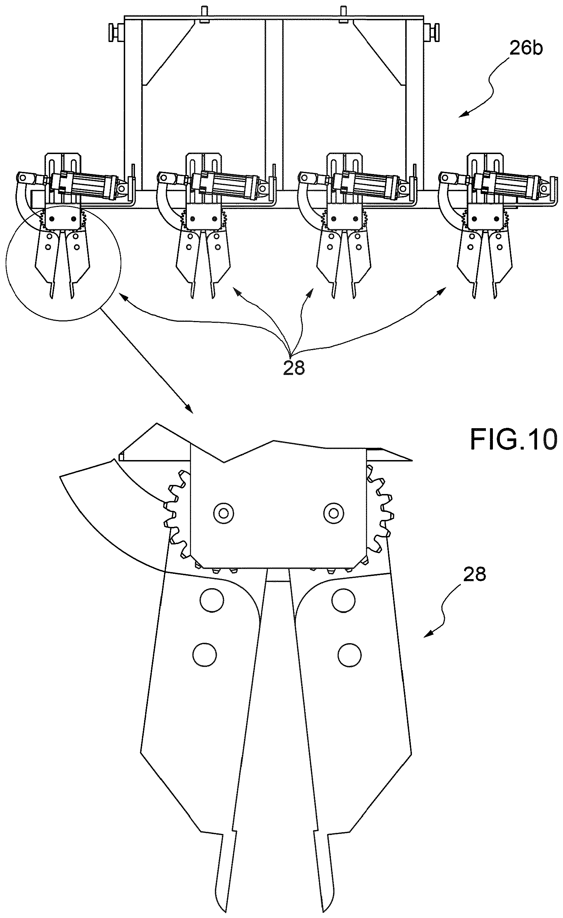

Next, the robot 6 carries the arm 26 into the structure 3 and rests the bar 21 between the bars 12 and 13 of the first rack and, once the bar 21 has been rested in place, governs release thereof. The arm 26 is further provided with a second organ 26b (Figures 4, 5, 9, 10, and 11), which is equipped (Figures 5, 9, 10, and 11) with four motor-driven grippers 28 and has (Figure 5) an organ 31 (represented schematically) designed to pull back the rod 27 into a position that is more retracted than that of the grippers 28. At this point, the arm 26 moves towards the belt 17 in such a way that the grippers 28 grip the four hams 2 that are carried directly by the hooks 18. In particular, the grippers 28 grip the loops 24 of the hams 2. Once the grippers 28 have gripped said hams 2, the robot 6 brings its arm 26 into the structure 3 and hooks these hams 2 onto the free pins 22 of the bar 21 that has already been placed. The hams 2 now carried by the bar 21 are divided into two rows, and these hams 2 have their own area to be smeared facing the outside of the area enclosed by the two rows. As may be noted, the hams 2 of the two rows remain spaced apart from one another by the cross member 14. In a different configuration, the organ 31 could envisage rotation upwards of the rod 27 in such a way that the end of the arm 26 is defined by the grippers 28.

Next, the operation described above is repeated for a subsequent bar 21 and so on until all the bars 21 of the first rack of the structure 3 have been placed, and then loading of the bars 21 in the second rack is started, and so on until all the racks of the structure 3 have been loaded. For each bar 21 of the racks above the first rack of the structure 3, the two rows of hams 2 of said bar 21 remain spaced apart from one another by the bar 21 of the underlying rack. Of course, in the structure 3, via the bars 12 and 13 racks are created that are spaced apart from another according to the length of the products to be stored in such a way that in any case the bottom ends of the products of the two rows obtained in one and same bar 21 are spaced apart from one another always by the cross member 14 or by the bar 21 set underneath. In this way, the products of the two rows of a same bar 21 never come into contact with one another.
The system 1 could, of course, comprise an electronic control unit, which manages all the organs present in the system 1 and manages all the steps of storage of the hams 2 in the structure 3. It should be pointed out that in Figures 1 to 4, for a clearer representation, neither of the organs 26a and 26b is shown. Further, the system 1 could be provided with a structure in which the bars 21 are stored, and basically the bars 21 could be housed in the structure 3 and/or in a different structure. An example according to the method forming the subject of the present invention comprises:
a first step, in which the robot 6, by means of the organ 26a, picks up a first bar 21 from the structure 3 or from a store (not illustrated);
a second step, in which the robot 6, by means of the first bar 21, hooks onto the bar 21 itself four hams 2 that are hanging on the hooks 18 of the chain 17;
a third step, in which the robot 6 places the bar 21 in the structure;
a fourth step, in which the robot 6, by means of the organ 26b, picks up from the chain 17 four hams 2 that are hanging on the hooks 18; and
a fifth step, in which the robot 6 transfers the four hams 2 just picked up from the chain 17 into the structure 3 by hanging the four hams 2 onto the pins 22 of the bar 21 that has just been placed in the structure 3.
The above steps are then repeated until the various racks of the structure 3 are filled.

From the above description the numerous advantages afforded by the present invention emerge clearly.

In particular, the inventive method enables not only simple and fast handling of the pork meats for storage thereof but above all a free circulation of the air between the pork meats hanging on a same bar and consequently proper curing of the pork meats.

## Claims

1. A method to store products (2), such as hams, salami, or the like transported by a conveyor chain (17) that has a plurality of hooks (18) on each of which one said product (2) is hanging, the method comprises:
a first step, in which a robot (6) picks up from a store (3), by means of a first organ (26a), a first bar (21);
a second step, in which said robot (6), by means of said first bar (21), hooks onto the bar (21) itself a plurality of said products (2) hanging on said hooks (18) of said chain (17);
a third step, in which said robot (6) places said bars (21) in a storage structure (3);
the method is **characterized in that** the first bar (21) has a plurality of pins (22); and in:
a fourth step, in which said robot (6), by means of a second organ (26b), picks up from said chain (17) a plurality of further products (2) hanging on said hooks (18); and
a fifth step, in which said robot (6) transfers the plurality of further products (2) just picked up from said chain (17) into said structure (3) by hanging said plurality of further products (2) onto the pins (22) with which said bar (21) just placed in said structure (3) is provided.

2. A method according to claim 1, **characterized in that** the sequence is repeated for each rack of said storage structure (3).

3. A method according to claim 1 and/or 2, **characterized in that** said products (2) hooked on said bar (21) during the first step are all arranged along a first side of said bar (21), and said products (2) picked up from said chain (17) during the fourth step are hooked onto said bar (21) on a second side opposite to said first side.

4. A method to store hams (2) according to the preceding claim, **characterized in that**, for each of said bars (21), said hams (2) are arranged with their area to be smeared facing the outside of the area enclosed by the first and the second sides into which they are divided.

## Patentansprüche

1. Verfahren zum Lagern von Erzeugnissen (2) wie z. B. Schinken, Salami oder ähnlichem, die durch eine Förderkette (17) transportiert werden, die eine Vielzahl an Haken (18) aufweist, von denen an jedem eines der Erzeugnisse (2) hängt, wobei das Verfahren umfasst:
einen ersten Schritt, in dem ein Roboter (6) mithilfe eines ersten Arms (26a) aus einem Magazin (3) eine erste Stange (21) aufnimmt;
einen zweiten Schritt, in dem der Roboter (6) mithilfe der ersten Stange (21) an die Stange (21) selbst eine Vielzahl der auf den Haken (18) der Kette (17) hängenden Erzeugnisse (2) einhakt;
einen dritten Schritt, in dem der Roboter (6) die Stangen (21) in eine Speicherstruktur (3) platziert;
wobei das Verfahren **dadurch gekennzeichnet ist, dass** die erste Stange (21) eine Vielzahl an Stiften (22) aufweist; und durch:
einen vierten Schritt, in dem der Roboter (6), durch einen zweiten Arm (26b), von der Kette (17) eine Vielzahl weiterer an den Haken (18) hängenden Erzeugnisse (2) aufnimmt; und
einen fünften Schritt, in dem der Roboter (6) die Vielzahl weiterer soeben von der Kette (17) aufgenommenen Erzeugnisse (2) in die Struktur (3) überführt, indem die Vielzahl weiterer Erzeugnisse (2) auf die Stifte (22) gehängt werden, mit denen die soeben in der Struktur (3) platzierten Stange (21) versehen ist.

2. Verfahren nach Anspruch 1, **dadurch gekennzeichnet, dass** diese Abfolge für jedes Ablagegestell der Speicherstruktur (3) wiederholt wird.

3. Verfahren nach Anspruch 1 und/oder 2, **dadurch gekennzeichnet, dass** die im ersten Schritt auf der Stange (21) eingehakten Erzeugnisse (2) alle entlang einer ersten Seite der Stange (21) angeordnet werden, und dass die im vierten Schritt von der Kette (17) aufgenommenen Erzeugnisse (2) auf die Stange (21) auf einer zweiten Seite, die der ersten Seite gegenüberliegt, eingehakt werden.

4. Verfahren zum Lagern von Schinken (2) nach dem vorangehenden Anspruch, **dadurch gekennzeichnet, dass** bei jeder der Stangen (21) die Schinken (2) so angeordnet werden, dass ihr einzureibender Bereich zur Außenseite des Bereichs zeigt, der durch die erste und zweite Seite, in die sie aufgeteilt sind, eingeschlossen ist.

## Revendications

1. Procédé pour stocker des produits (2), tels que des jambons, des salamis ou d'autres produits semblables transportés par une chaîne transporteuse (17) qui comporte une pluralité de crochets (18) sur chacun desquels un desdits produits (2) est suspendu, le procédé comprenant :
une première étape, dans laquelle un robot (6) prend, dans un magasin (3), une première barre (21) au moyen d'un premier organe (26a);
une deuxième étape, dans laquelle ledit robot (6), au moyen de la première barre (21), accroche sur la barre (21) elle-même une pluralité desdits produits (2) suspendus sur lesdits crochets (18) de ladite chaîne (17) ;
une troisième étape, dans laquelle ledit robot (6) place lesdites barres (21) dans une structure (3) de stockage,
le procédé étant **caractérisé en ce que** la première barre (21) comporte une pluralité de broches (22) ; et par :
une quatrième étape, dans laquelle ledit robot (6), au moyen d'un second organe (26b), prélève de ladite chaîne (17) une pluralité d'autres produits (2) suspendus auxdits crochets (18) ; et
une cinquième étape, dans laquelle ledit robot (6) transfère la pluralité d'autres produits (2) qu'il vient de prélever de ladite chaîne (17) dans ladite structure (3) en pendant ladite pluralité d'autres produits (2) aux broches (22) dont est pourvue ladite barre (21) qui vient d'être placée dans ladite structure (3).

2. Procédé selon la revendication 1, **caractérisé en ce qu'**on répète la séquence pour chaque rayonnage de ladite structure (3) de stockage.

3. Procédé selon la revendication 1 et/ou 2, **caractérisé en ce que** lesdits produits (2) accrochés sur ladite barre (21) pendant la première étape sont tous disposés le long d'un premier côté de ladite barre (21), et lesdits produits (2) prélevés sur ladite chaîne (17) pendant la quatrième étape sont accrochés sur ladite barre (21) d'un second côté opposé audit premier côté.

4. Procédé pour stocker des jambons (2) selon la revendication précédente, **caractérisé en ce que**, pour chacune desdites barres (21), lesdits jambons (2) sont disposés avec leur zone à frotter tournée vers l'extérieur de la zone entourée par le premier et le second côté suivant lesquels ils sont répartis.
